# EUROPEAN PATENT SPECIFICATION

(11) **EP 3 976 510 B1**
(45) Date of publication and mention of the grant of the patent: **31.07.2024**
(21) Application number: 20736418.3
(22) Date of filing: 03.06.2020
(51) Int. Cl.: B65G 49/08, B65G 61/00, B65G 60/00

(54) **METHOD FOR TRANSFERRING ARTICLES OF THE CERAMIC PROCESSING INDUSTRY**
VERFAHREN ZUM TRANSFERIEREN VON ARTIKELN DER KERAMIKVERARBEITENDEN INDUSTRIE
PROCÉDÉ DE TRANSFERT D'ARTICLES DE L'INDUSTRIE DE TRAITEMENT CÉRAMIQUE

(30) Priority: 03.06.2019 IT 201900007851; 02.09.2019 IT 201900015380
(43) Date of publication of application: 06.04.2022
(73) Proprietor: SACMI COOPERATIVA MECCANICI IMOLA SOCIETA' COOPERATIVA, 40026 Imola (BO) (IT)
(72) Inventor: GONNI, Paolo, 40026 Imola (BO) (IT); BALLARDINI, Matias, 40026 Imola (BO) (IT); GAMBAZZA, Mattia, 40026 Imola (BO) (IT)
(74) Representative: Studio Torta S.p.A.
(86) International application number: PCT/IB2020/055241
(87) International publication number: WO 2020/245743

(56) References cited:
- EP-A1- 0 377 400
- EP-A1- 0 525 564
- DE-A1- 2 342 782
- DE-A1- 3 207 890
- DE-A1- 3 442 333
- DE-A1- 4 407 392
- FR-A1- 2 814 161
- JP-A- H0 781 752

## Description

### CROSS-REFERENCE TO RELATED APPLICATIONS

This patent application claims priority from Italian patent applications no. 102019000007851 filed on 03/06/2019 and no. 102019000015380 filed on 02/09/2019.

### TECHNICAL FIELD

The present invention relates to a method for transferring articles of the ceramic processing industry.

### BACKGROUND TO THE INVENTION

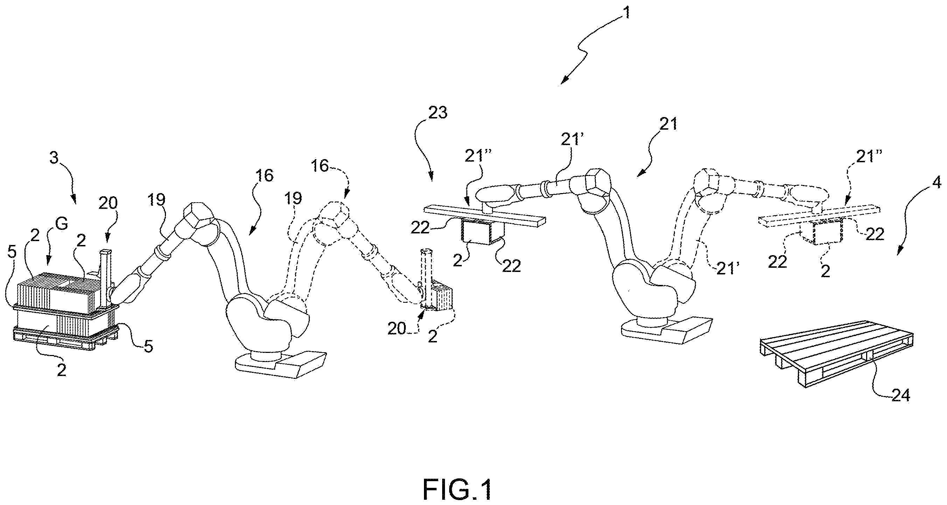

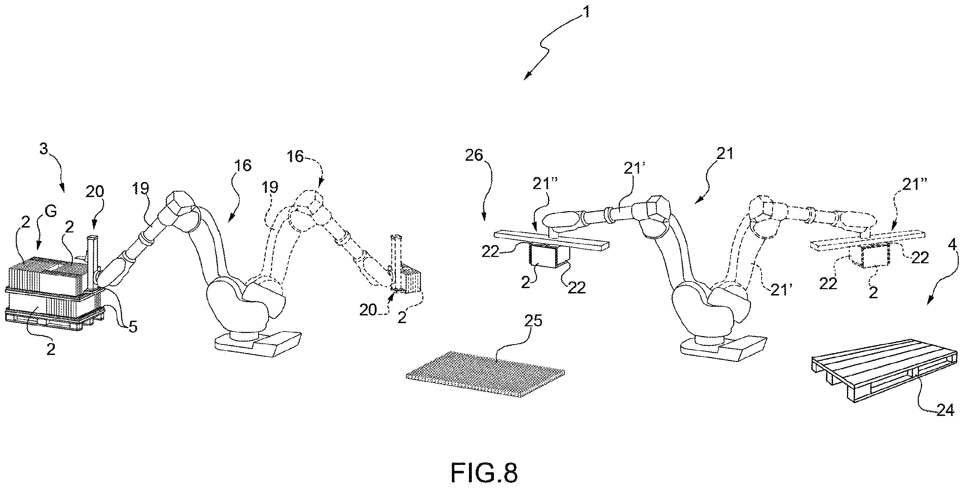

In the field of the ceramic processing industry, horizontal grippers are commonly used to transfer ceramic articles (typically tiles or packs containing tiles). Said grippers (structurally similar to the holding device 21 illustrated in figures 1 and 8) laterally clamp the ceramic articles, typically coming into contact with the edges of the ceramic articles. In this regard, it is worth noting that it is not advisable to exert a pressure directly on the faces of the tiles, since there is a high risk of causing breakage of the tiles.

However, the horizontal grippers have the drawback of requiring a sufficient free space around the articles to be withdrawn in order to operate correctly. This problem is particularly felt when the articles to be withdrawn are part of a group of articles arranged close to and/or in contact with one another.

DE4407392A1, JPH0781752, EP0377400, FR2814161, DE3442333, DE3207890, EP0525564, DE2342782 disclose several different systems for moving objects of various types between positions. DE4407392A1 discloses the features of the preamble of claim 1.

It is an object of the present invention to provide a method for transferring articles of the ceramic processing industry which overcomes, at least partially, the drawbacks of the known art and at the same time is easy and inexpensive to implement.

According to the present invention a method is provided for transferring articles of the ceramic processing industry as claimed in the following independent claim and, preferably, in any one of the claims depending directly or indirectly on the independent claim.

### BRIEF DESCRIPTION OF THE FIGURES

The invention is described below with reference to the accompanying drawings, which illustrate some non-limiting examples of embodiment thereof, wherein:
- figure 1 is a lateral schematic view of a system;
- figure 2 is a perspective view of a component on an enlarged scale of the system of figure 1;
- figure 3 is a plan view of the component of figure 2;
- figure 4 is a detail on an enlarged scale of figure 2;
- figure 5 is a detail on an enlarged scale of figure 3;
- figure 6 illustrates, on an enlarged scale, components of the system of figure 1;
- figure 7 illustrates, on an enlarged scale, a component of figure 6;
- figure 8 is a lateral schematic view of a further example of a system;
- figure 9 illustrates, in perspective and on an enlarged scale, components of the system of figures 1 and 8;
- figure 10 illustrates articles of the ceramic processing industry arranged horizontally;
- figure 11 is a lateral schematic view of a further example of a system;
- figure 12 illustrates, on an enlarged scale, a component of the system of figure 11;
- figure 13 illustrates, on an enlarged scale, components of the system of figure 11;
- figure 14 is a perspective view of a detail of a different example of the component of figure 2;
- figure 15 is a plan view of a detail of the component of figure 14;
- figure 16 is a plan view of a different example of the component of figure 2;
- figure 17 is a perspective view of a detail on an enlarged scale of figure 16;
- figure 18 is a section of a detail on an enlarged scale of the component of figure 16;
- figure 19 is a plan view of a different example of the component of figure 2;
- figure 20 is a perspective view of a detail on an enlarged scale of figure 19; and
- figure 21 is a section of a detail on an enlarged scale of the component of figure 19.

### DETAILED DISCLOSURE

In figure 1, the number 1 indicates as a whole a system for transferring articles 2 of the ceramic processing industry from an input station 3 to an output station 4. The article 2 comprises (is) at least a substantially flat product of the ceramic processing industry (namely a slab - e.g. a tile) . In particular, the substantially flat product is made of ceramic.

In some specific non-limiting cases, the articles 2 are boxes (more precisely, each box encloses one or more substantially flat articles - slabs) and the transfer system 1 is configured to transfer the boxes individually or in groups.

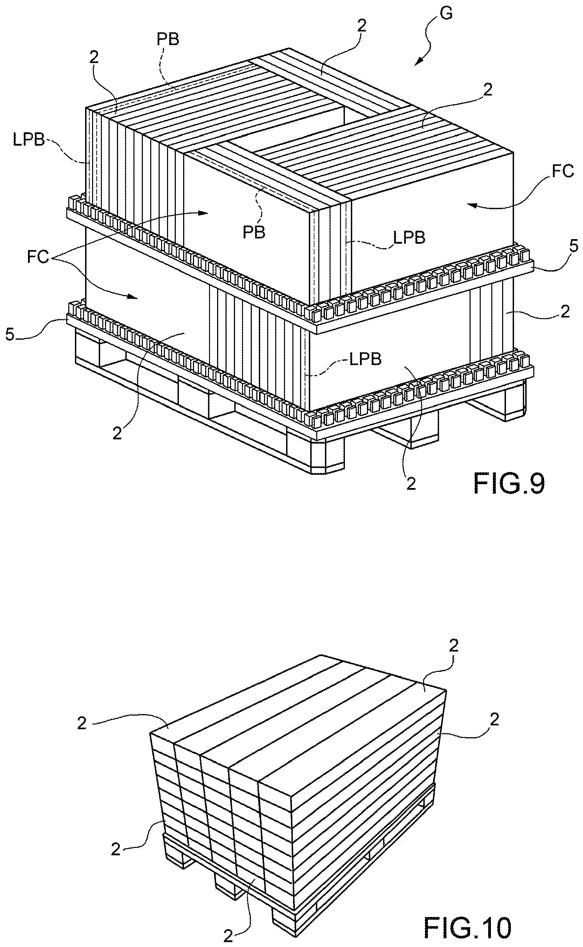

Each article 2 is delimited by a respective peripheral edge PB (see, in particular, figure 9) and has two major faces FC opposite each other. The two major faces FC are delimited by the peripheral edge PB (and are substantially parallel to each other).

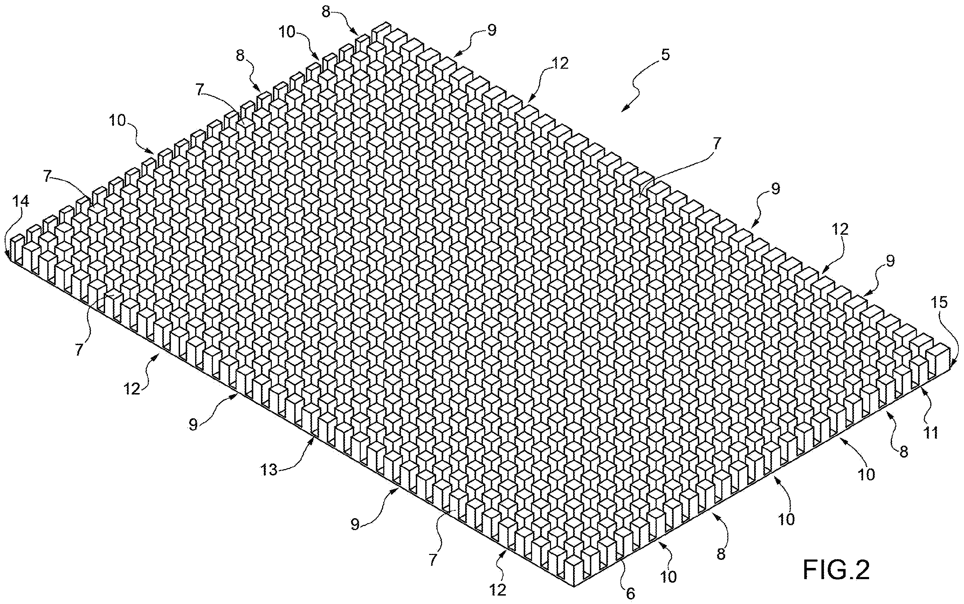

The system 1 comprises a support 5 (better illustrated in figures 2-5), which is configured to support a group G of articles 2, more precisely a group of boxes. The support 5 is configured to support the articles 2 (and/or the boxes) arranged (on their edges) vertically (as illustrated in figure 9; figure 10, on the other hand, illustrates boxes - and, therefore, the articles 2 - arranged horizontally) . The articles 2 (and/or the boxes) arranged vertically (namely standing - in an erect manner) rest on at least one portion of their peripheral edge PB; whereas the articles 2 (and/or the boxes) arranged horizontally rest on one of their major faces FC.

In particular (figure 9), the articles 2 are arranged in the group G so that at least a lateral portion (at least one side LPB) of the peripheral edge PB of an article 2 is (completely) covered (and therefore is not accessible, for example, to a gripper jaw for the transfer of articles) by one or more other articles 2 of the group G. In detail, at least a lateral portion (at least one side LPB) of the peripheral edge PB of an article 2 is in contact with at least a further article 2 (namely directly or, for example, with the interposition of the walls of the relative boxes).

The support 5 (better illustrated in figures 2-5), in turn, comprises a base portion 6 and a plurality of projections 7, which protrude from the base portion 6.

Advantageously but not necessarily, the projections 7 are arranged on the base portion 6 so as to define rows 8. In particular, the projections 7 are arranged on the base portion 6 so as to define also transverse rows 9 (more precisely, substantially perpendicular) to the rows 8. In particular, the projections 7 are configured to support the articles 2.

The support 5 further comprises a plurality of recesses 10, each of which extends from an end edge 11 of the support 5 and is arranged between the projections 7. Each recess 10 is (at least partially) delimited by the projections 7.

In particular, each recess 10 extends (at least partially) between two rows 8 directly next to each other (namely without the interposition of further projections 7). In other words, two rows 8 directly next to each other define (at least partially) each recess 10.

In particular, the recesses 10 are substantially straight. More in particular, the recesses 10 are substantially parallel to one another.

Advantageously but not necessarily, the support 5 further comprises a plurality of recesses 12, each of which extending from an end edge 13 of the support 5 between two rows 9 directly next to each other (namely without the interposition of further projections 7). In other words, two rows 9 directly next to each other define each recess 12.

In this way, it is possible to access recesses 10 or 12 from different parts of the support 5.

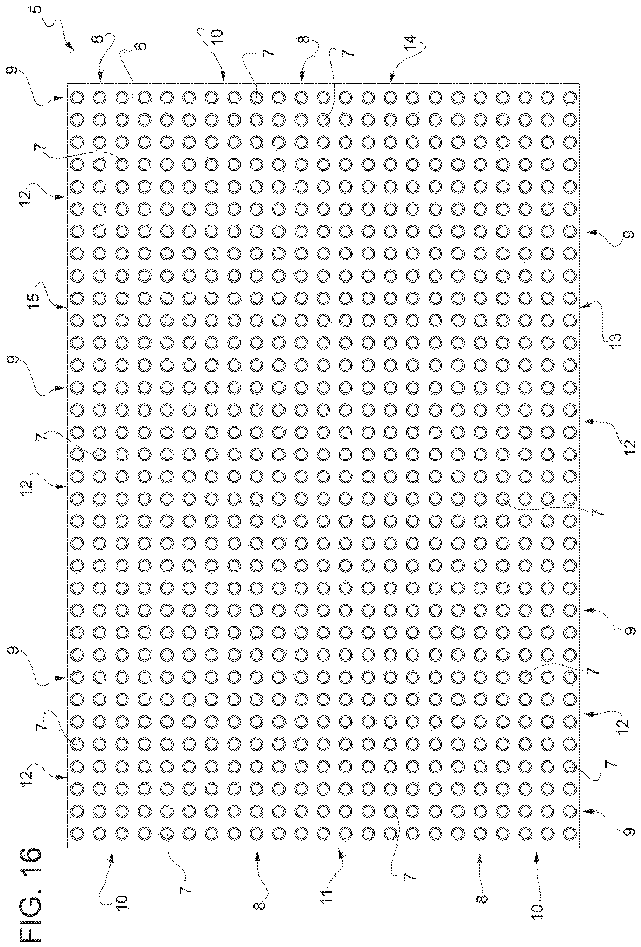

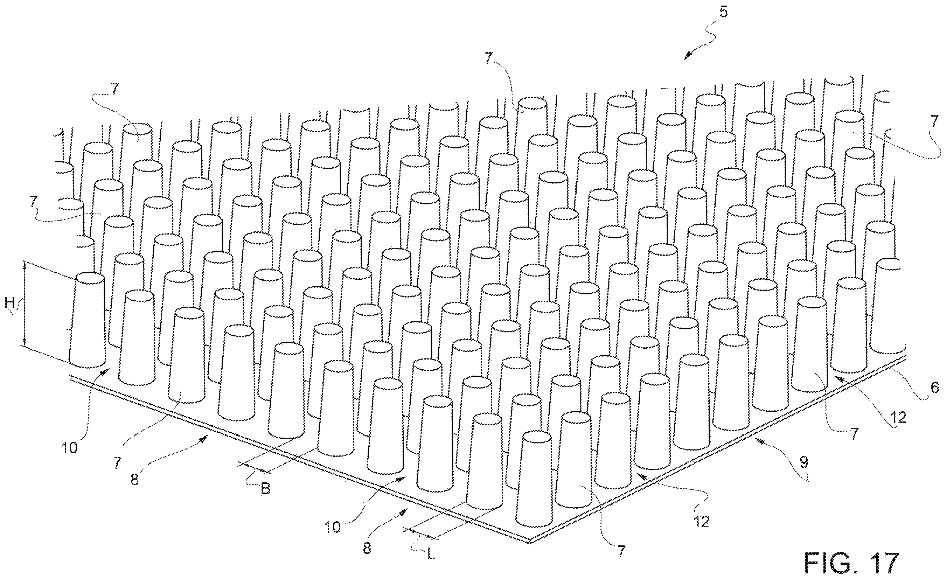

According to some embodiments (e.g. figures 16, 17 and 19), at least one of the rows 8 (and/or 9) extends (starts) a certain distance from the end edge 11 (and/or 13). In other words, the projection 7 of a row 8 (and/or 9) nearest to the end edge 11 (and/or 13) is in any case spaced from the end edge 11 (it is not arranged at the end edge 11).

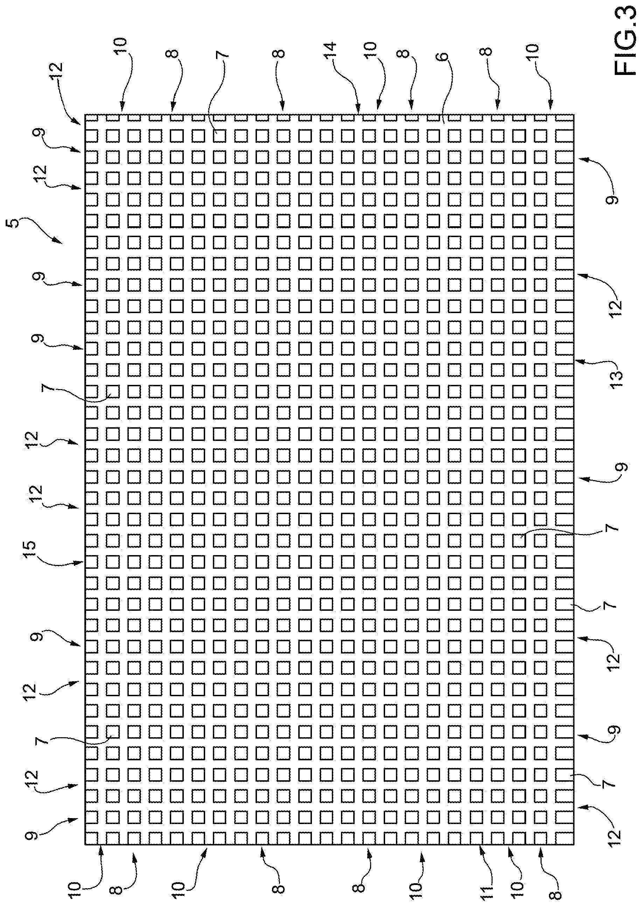

Advantageously but not necessarily, at least one of the rows 8 (and/or 9) extends (starts) from the end edge 11 (and/or 13). In other words, the projection 7 of a row 8 (and/or 9) nearest the end edge 11 (and/or 13) is arranged at the end edge 11 (and/or 13) (figures 3-5, 14 and 15).

In particular, the recesses 12 are substantially straight and transverse (e.g. substantially perpendicular) to the recesses 10. More in particular, the recesses 12 are substantially parallel to one another.

Advantageously but not necessarily, the recesses 10 extend from the end edge 11 to a further end edge 14 of the support 5, said end edge 14 being opposite to the first end edge.

In this way, it is possible to access the recesses 10 from different parts of the support 5.

Additionally or alternatively, the recesses 12 extend from the end edge 13 to an end edge 15 of the support 5, which end edge 15 is opposite the end edge 13.

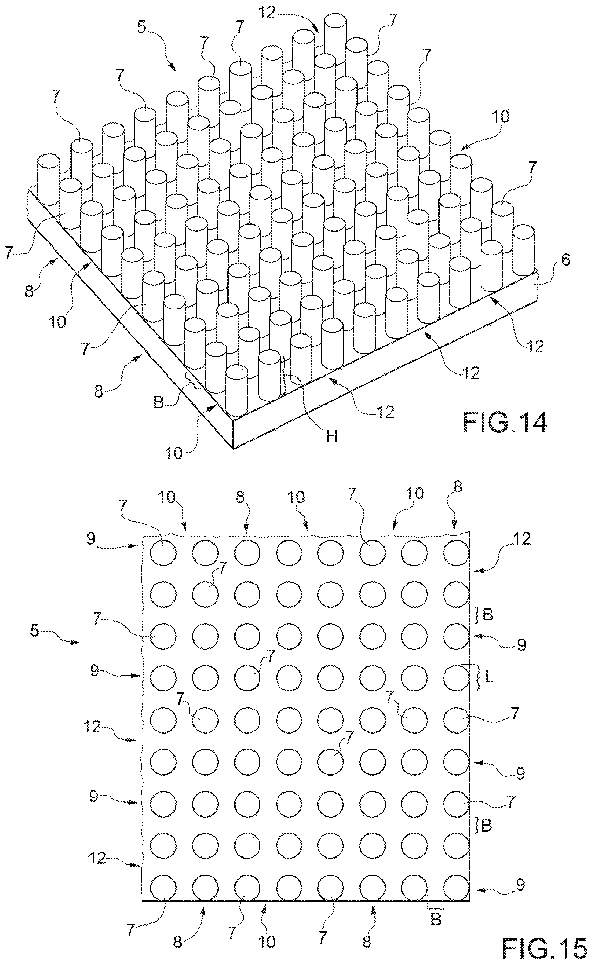

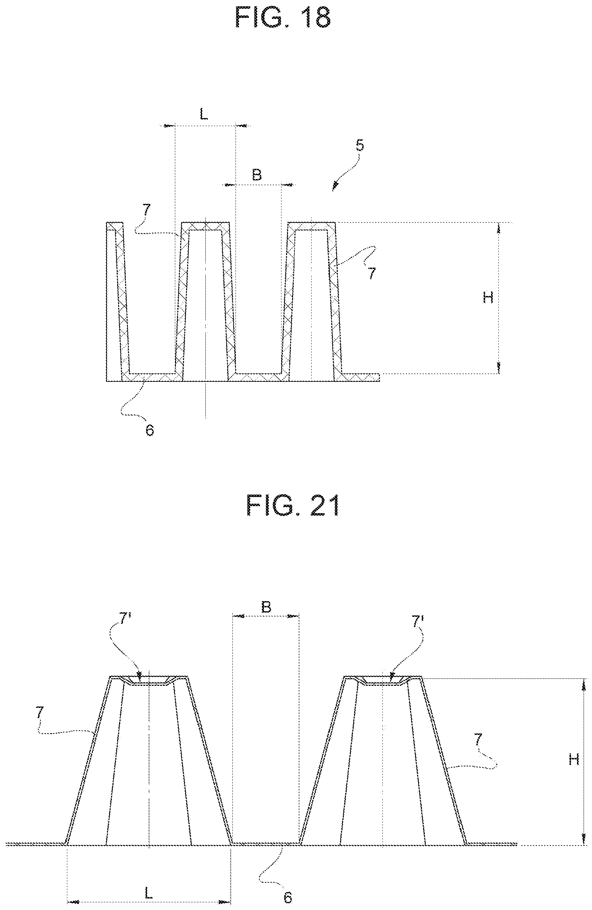

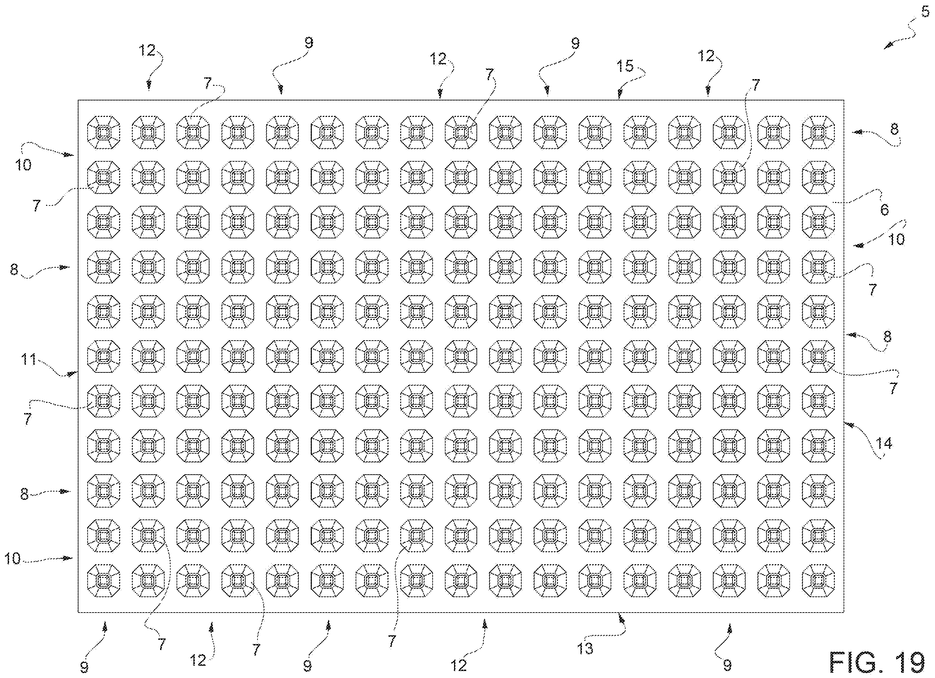

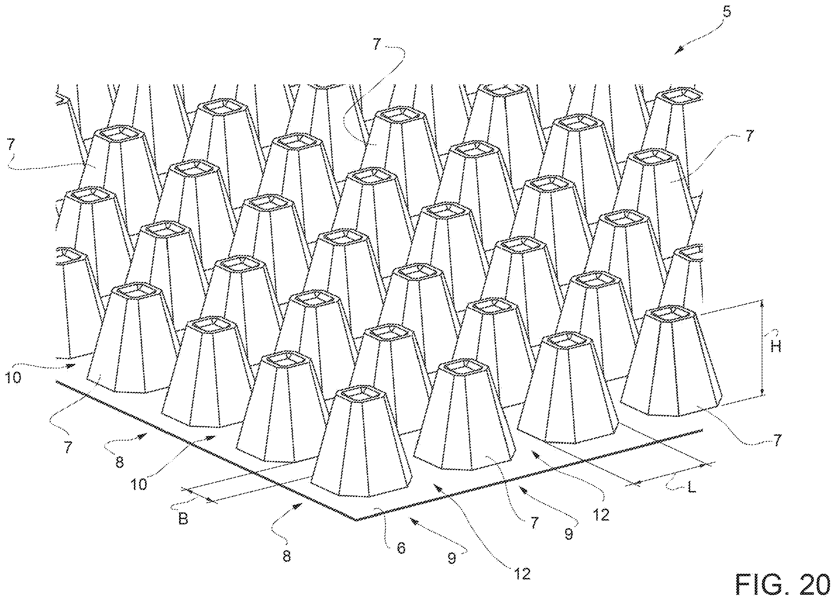

Advantageously but not necessarily, each projection 7 has a shape chosen from the group consisting of: polyhedral (figures 2-5), cylindrical (figures 14 and 15), conical, truncated cone (figures 16-18), pyramidal, truncated pyramid (figures 19-21).

Advantageously but not necessarily, the polyhedral shape is a polyhedral form with convex polygonal base (section) with at least four corners (in particular, with at least six corners; more in particular, with at least eight corners). According to specific non-limiting embodiments, the polyhedral shape has a rectangular base (section) (in particular, square - figures 2-5). According to other specific non-limiting embodiments, the polyhedral shape has an octagonal base (section) (in particular, regular).

Alternatively or additionally, the cylindrical shape is a cylindrical form with section (transverse - perpendicular to the longitudinal extension of the projection 7) substantially circular (figures 14 and 15).

Alternatively or additionally, the conical shape is a conical form with section (transverse - perpendicular to the longitudinal extension of the projection 7) substantially circular (figures 16-18).

Alternatively or additionally, the truncated cone shape is a truncated cone form with section (transverse - perpendicular to the longitudinal extension of the projection 7) substantially circular.

Alternatively or additionally, the pyramidal shape is a pyramidal form with polygonal convex base (section) with at least four corners (in particular, with at least five corners; more in particular, with at least six corners; even more in particular, with at least eight corners). According to specific non-limiting embodiments, the pyramidal shape has an octagonal base (section) (in particular, regular - figures 19-21).

Alternatively or additionally, the truncated pyramid shape is a truncated pyramid form with polygonal convex base (section) with at least four corners (in particular, with at least five corners; more in particular, with at least six corners; even more in particular, with at least eight corners). According to specific non-limiting embodiments, the truncated pyramid shape has an octagonal base (section) (in particular, regular).

As is known, by convex polygon it is meant a polygon that has all the internal angles smaller than or equal to a flat angle.

With reference to the shapes of the projections 7, by (transverse) section we mean the section perpendicular to the longitudinal extension (from the base portion 6) of the projection 7.

According to some non-limiting embodiments, each projection 7 has a shape chosen from the group consisting of: polyhedral, cylindrical, truncated cone and truncated pyramid.

Advantageously but not necessarily, each projection 7 has a shape chosen from the group consisting of: cylindrical, truncated cone and truncated pyramid.

Advantageously but not necessarily, each projection 7 has a shape chosen from the group consisting of: cylindrical and truncated cone.

It should be noted that the projections 7 having these shapes (in particular, with a substantially round section) can be easier to produce (in particular, by means of thermoforming).

According to some non-limiting embodiments, the majority of the (in particular, all the) projections 7 have substantially the same shape.

Advantageously but not necessarily, each projection 7 has a recess arranged on an upper end (opposite to the base portion 6) of the projection 7. In this way, a better distribution of the forces exerted by the above arrangement on the support 5 is obtained.

Typically, the support 5 (and therefore the projections 7) can be produced by means of thermoforming and/or injection. For example, the embodiment of the support 5 illustrated in figures 16 to 18 can be produced by injection; the embodiment of the support 5 illustrated in figures 19 to 21 can be produced by thermoforming.

More precisely, the end edges 11 and 14 are transverse (in particular, substantially perpendicular) to the end edges 13 and 15.

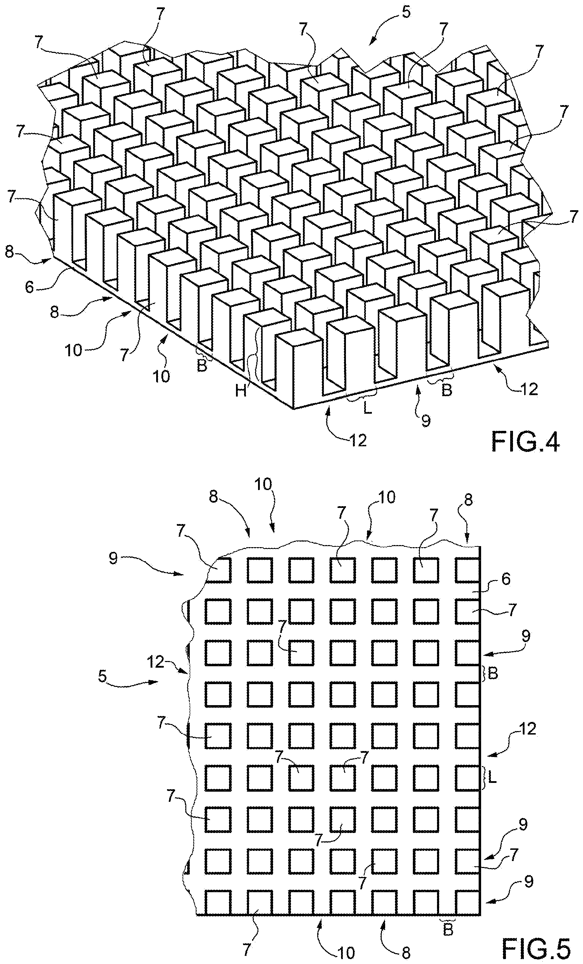

According to some non-limiting embodiments (with particular reference to figures 4 and 5), the projections 7 have a width L of at least approximately 12 mm (at least approximately 16 mm). In particular, the width L is up to (no greater than) approximately 30 mm (more in particular, up to 20 mm).

Additionally or alternatively, the recesses 10 (and possibly the recesses 12) have a width B of at least approximately 12 mm (at least approximately 13 mm). In particular, the width B is up to (no greater than) approximately 20 mm (more in particular, up to 15 mm) .

In some non-limiting cases, the recesses 10 (and possibly, the recesses 12) extend from the end edge 11 (or from the end edge 13) for at least 15 cm.

Additionally or alternatively, the projections 7 have a height H starting from the base portion of at least 12 mm (in particular, at least 20 mm). In particular, the height H is up to (no greater than) approximately 50 mm (more in particular, up to 30 mm).

The above dimensions have experimentally proved to be the most advantageous for guaranteeing effective support of the articles 2 and at the same time easy access to the recesses 10 and/or 12 (in particular, by the moving device 16, described in further detail below).

According to some non-limiting embodiments, the support 5 has dimensions of approximately 86 cm x 124 cm or approximately 100 cm x 122 cm.

According to some non-limiting embodiments, at least the projections comprise (in particular, are made of): polyethylene (e.g. PE and/or HDPE) and/or polycarbonate (PC) and/or acrylonitrile-butadiene-styrene (ABS) and/or polystyrene (PS) and/or polypropylene (PP) and/or polyvinyl chloride (PVC) and/or wood and/or sheet metal. More precisely, the support 5 comprises (is made of): polyethylene (e.g. PE and/or HDPE) and/or polycarbonate (PC) and/or acrylonitrile-butadiene-styrene (ABS) and/or polystyrene (PS) and/or polypropylene (PP) and/or polyvinyl chloride (PVC) and/or wood and/or sheet metal. In some specific cases, the support 5 comprises (is made of) polyethylene (e.g. PE and/or HDPE).

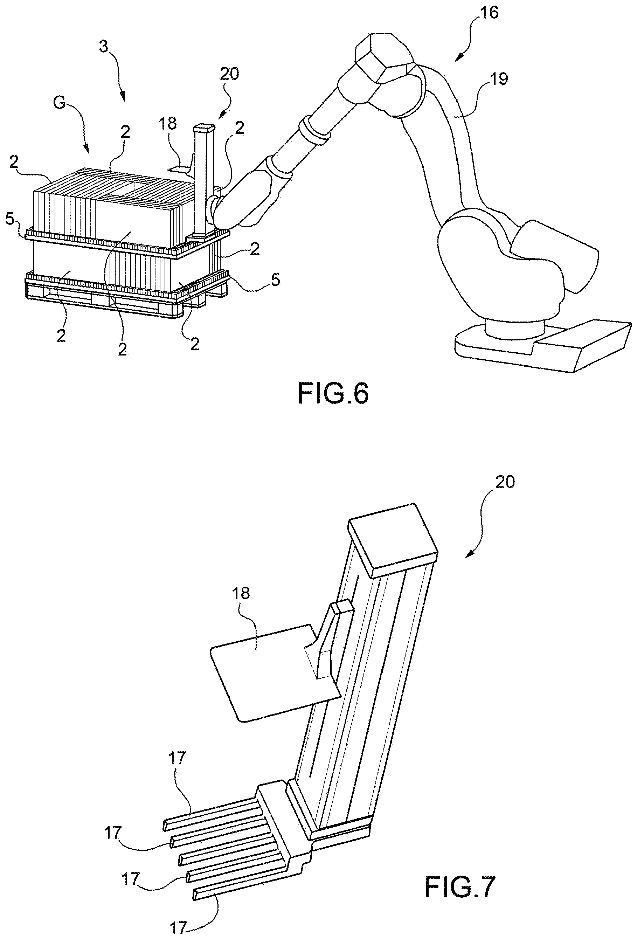

The system 1 further comprises (figures 1 and 2) a moving device 16 which, in turn, comprises (see, in particular, figure 7) at least two tines 17 and is configured to insert at least part of the tines 17 in corresponding recesses 10 (and/or 12) and move (move away) at least one article 2 of the cited group G of articles 2 from the support 5 (in particular, from the input station 3).

It should be noted that the particular structure described above (with the possibility of the tines 17 being inserted in the recesses 12) allows the moving device 16 to move (and possibly grip - as described below in further detail) the article/s 2 simply and rapidly without the interference of further articles 2 of the group G. In this way it is, therefore, also possible to reduce the risk of damaging further articles 2 of the group G.

The moving device 16 is configured to lift the article 2 from the support 5 (in particular, from the input station 3).

It should be noted that, when the projections 7 have a rounded (substantially round) or polygonal section with more than four corners, insertion of the tines 17 in the recesses 10 (and/or 12) is facilitated (in particular, in the case of deformations of the projections 7), reducing the risk, among other things, of the tines jamming, sticking and/or damaging the projections 7. This type of advantage is more evident when the projections have a rounded (substantially round) section.

The moving device 16 comprises at least a countering element 18 (in particular, a countering plate). The moving device 16 is configured to clamp (in particular, after inserting the tines 17 in the corresponding recesses 10 - and/or 12) the article 2 (or the articles 2) between the countering element 18 and the tines 17 (bringing the countering element 18 and the tines 17 close to each other so that the countering element 18 and the tines 17 come into contact with the peripheral edge PB). Advantageously but not necessarily (see, in particular, figures 1, 6 and 8), the moving device 16 comprises a robotic arm 19. According to some non-limiting embodiments, the moving device 16 further comprises a holding head 20 (better illustrated in figures 6 and 7), which is mounted on the robotic arm 19 (in particular, at one end thereof) and comprises the tines 17, the countering element 18 and an actuator (of known type and not illustrated; e.g. an electric actuator) to move the tines 17 and/or the countering element 18 with respect to each other (in other words, the actuator is configured to move the tines 17 and/or the countering element 18).

Advantageously but not necessarily, the system 1 also comprises a further holding device 21 (figures 1 and 8), which is configured to clamp one or more articles 2 (also inside boxes) and convey it/them to the output station 4.

In particular, the holding device 21 comprises two clamping elements 22 (jaws) configured to laterally clamp one or more articles 2 (also boxes), in particular coming into contact with the relative peripheral edge/s PB.

According to some non-limiting embodiments, the holding device 21 comprises a robotic arm 21'.

More in particular, the moving device 16 further comprises a holding head 21", which is mounted on the robotic arm 21' (in particular, at one end thereof) and comprises the clamping elements 22 and an actuator (of known type and not illustrated; e.g. an electric actuator) to move the clamping elements 22 with respect to each other (in other words, the actuator is configured to move one or both the clamping elements 22, moving them close to each other and away from each other).

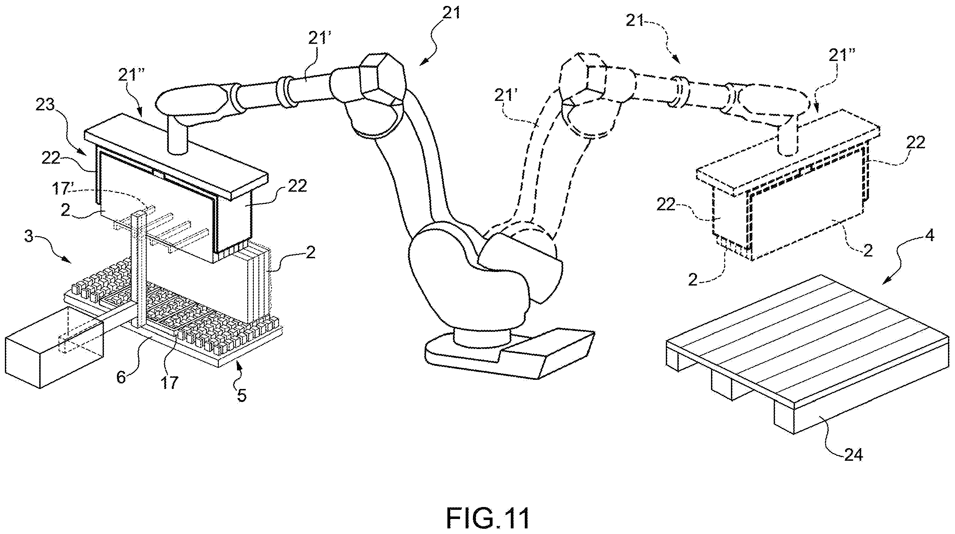

With particular reference to figures 11 to 13, according to some non-limiting embodiments, the moving device 16 (instead of being an anthropomorphic robotic arm) comprises a first group of base tines 17 and a second group of lifting tines 17' and an actuator (of known type and not illustrated) configured to move (lift) the lifting tines 17' with respect to the base tines 17. The base tines 17 are configured to discharge onto the support 5 the weight of the lifting tines 17' and the load supported by said lifting tines 17.

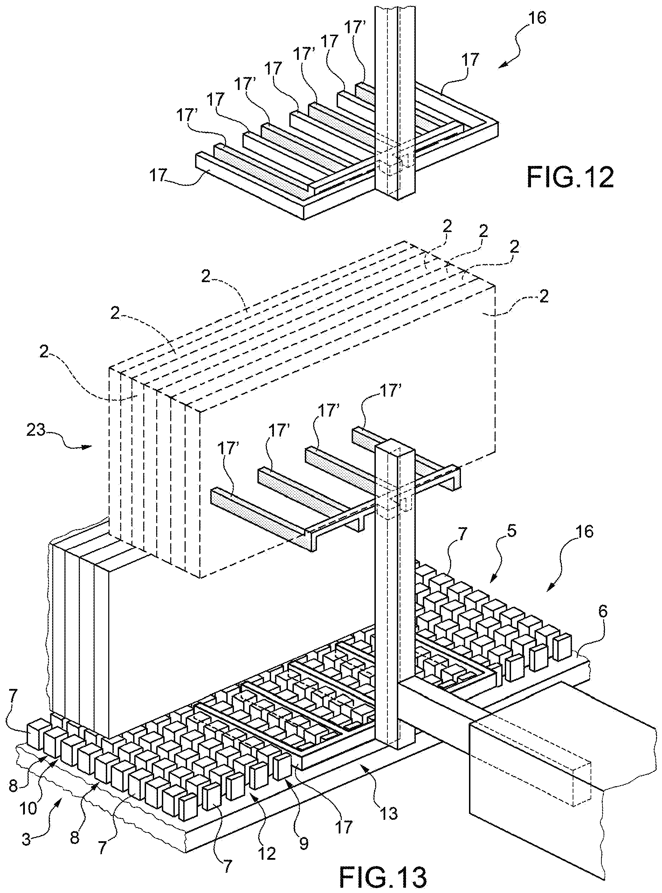

In these cases, in use, the tines 17 and 17' (in the configuration illustrated in figure 12) are all inserted in the recesses 10 (and/or 12). At this point, the lifting tines 17' (moved by the cited actuator) are lifted, moving the article 2 (or the articles 2) upwards from the support 5 (in particular, from the input station 3 - figure 13). In other words (in these cases), the moving device 16 moves the article 2 (or the articles 2) only vertically.

In particular, in these cases, the transfer station 23 (better described below) is above the support 5 (more precisely, above the group G).

In some non-limiting cases (always referring to the embodiments exemplified in figures 11 to 13), the moving device 16 also comprises a movement unit (only partially illustrated in figures 11 and 13) configured to move the tines 17 and 17' (substantially horizontally) so as to insert them in the (and disinsert them from the) recesses 10 (and/or 12).

Advantageously but not necessarily, the system 1 comprises at least a control unit (of type known per se and not illustrated) configured to control (and coordinate) the movements of the holding devices 16 and 21.

According to some non-limiting embodiments (like the one illustrated in figure 1), the control unit is configured to coordinate the movements of the holding devices 16 and 21 so that the moving device 16 collects the article 2 (or the articles 2) from the input station 3 (more precisely, from above the support 5) and transfers it (them) (directly) (at a transfer station 23) to the holding device 21, which receives the article 2 (or the articles 2) and takes it to the output station 4 (for example, on a specific pallet 24 - more precisely in a defined position).

It should be noted that the transfer between the holding devices 16 and 21 can be carried out in a particularly simple manner given that the moving device 16 is configured to support the articles 2 from below (and/or is configured to grip the articles 2 at the top and bottom) and the holding device 21 is configured to grip the articles 2 laterally. Furthermore, the transfer is performed at a distance from the group G.

According to some non-limiting embodiments (see in particular figure 8), the system 1 also comprises a further support 25 (defined as the support 5) arranged at an intermediate station 26 (in particular, arranged between the moving device 16 and the holding device 21). In these cases, typically, the control unit operates the moving device 16 so that the moving device 16 collects the article 2 (or the articles 2) from the input station 3 (more precisely, from above the support 5) and transfers it (them) to the intermediate station 26 on the support 25. Furthermore, the control unit operates the holding device 21 so as to collect the article 2 (or the articles 2) from the support 25 and take it to the output station 4 (on the support 25).

It should be noted that, in these cases, the moving device 16 easily deposits the article 2 (or the articles 2) on the support 25, since the tines 17 can enter (enter) the recesses 10 (or 12) of the support 25. Furthermore, the holding device 21 can easily grip the article/s 2 since, among other things, it has/they have been moved away from the group G present on the support 5.

According to specific embodiments, the system 1 is configured to implement a method as described below.

In accordance with the present invention, a method is provided for transfer of the articles 2 (as defined above) from the input station 3 to the output station 4. In particular, the method is implemented by the system 1.

The method entails use of the support 5 and comprises a standing step, during which at least the group G of articles 2 is arranged on the support 5 (more precisely, on said projections 7) at the input station 3; and an insertion step, during which the moving device 16, which comprises at least two tines 17, inserts at least part of the tines 17 in corresponding recesses 10 (in particular, below at least an article 2 of said group G of articles of the ceramic processing industry) of the support 5 (in particular, the movement of the tines 17 is substantially horizontal). In particular, the first insertion step is (at least partially) simultaneous with the standing step.

The support 5 is as defined above relative to the system 1. The support 5 comprises the projections 7 as defined above relative to the system 1.

The method also comprises a first gripping step, which comprises the insertion step and during which the moving device 16 clamps (in particular, after the insertion step) the article/s 2 (possibly boxes, for example containing slabs) between the countering element 18 (arranged above the article/s) and the tines 17 (arranged below the article/s). The article 2 (or the articles 2) is (are) clamped above and below. In particular, the first gripping step is (at least partially) simultaneous with the standing step.

The moving device 16 clamps at least said at least one first article 2 between said countering element 18 and said tines 17, making the countering element 18 and the tines 17 close to one another so that the countering element 18 and the tines 17 come into contact with said peripheral edge PB.

The method further comprises a moving step, which is (at least partially) subsequent to the insertion step (and possibly to the first gripping step) and during which the moving device 16 moves (in particular, lifts) the article/s 2 from the support 5 (more precisely, from the input station 3; in particular, so as to move it/them away from the group G); and a transport step, during which the article/s 2 is/are taken to the output station 4 (on the pallet 24).

During the standing step, the articles 2 (and/or the relative boxes) are arranged (on their sides) vertically.

The articles 2 (and/or the boxes) arranged vertically rest on at least a portion of their peripheral edge PB.

In particular (figure 9), the articles 2 are arranged in the group G so that at least a lateral portion (at least a side LPB) of the peripheral edge PB of an article 2 is (completely) covered (and is therefore not accessible, for example to a gripper jaw for the transfer of articles) by one or more other articles 2. More in particular, at least a lateral portion (a side LPB) of the peripheral edge PB of an article 2 is in contact with at least a further article 2 (directly or by interposition of the walls of the relative boxes).

Advantageously but not necessarily, during the moving step (in particular, also during the gripping step), at least a further article 2 (more precisely, the article 2 that covers the side LPB of the peripheral edge PB of the article 2 which is moved - collected - from the input station 3) of the group G remains on the support 5 (in particular, substantially motionless). More precisely, during the moving step (and during the gripping step), the moving device 16 does not touch the cited further article 2 (even more precisely, during the moving step, the further article 2 does not come into contact with any further element).

According to some non-limiting embodiments, during the moving step, the moving device 16 lifts the article 2 (from the support 5) .

Advantageously but not necessarily, the method comprises a second gripping step, during which the holding device 21 clamps the article/s 2 laterally. In particular, the second gripping step is (at least partially) subsequent to the moving step.

According to some non-limiting embodiments (see, in particular, figure 1), the moving device 16 leaves (in particular, cedes; more in particular releases) the article/s 2 so that the article/s 2 is/are transferred to the holding device 21. In particular, this occurs during and/or after the second gripping step.

It should be noted that, in this way, transfer of the articles 2 is particularly rapid and efficient.

According to some non-limiting embodiments, the second gripping step is subsequent to the insertion step (more precisely but not necessarily, it is subsequent to the first gripping step).

Advantageously but not necessarily, during the second gripping step, the holding device 21 grips the article/s 2 while the article/s 2 is/are still (at least partially) supported by the moving device 16. In other words, in these cases, the moving device 16 leaves (in particular, yields; more in particular, releases) the article/s 2, after the second gripping step.

According to some non-limiting embodiments, the holding device 21 clamps the article 2 above the further article/s 2 (which remains/remain on the support 5).

In particular, the holding device 21 takes the article/s 2 to the output station 4.

Advantageously but not necessarily, the clamping elements 22 (jaws) of the holding device 21 clamp laterally (moving substantially horizontally) the article/s 2 exerting pressure on (coming into contact with) the peripheral edge/s PB.

According to some non-limiting embodiments (see, in particular, figure 8), the moving device 16 conveys the article/s 2 to the intermediate station 26 on the support 25 (which is defined like the support 5, but can be the same as or different from the support 5). More precisely, the moving device 16 arranges the article/s 2 on the support 25 inserting at least part of the tines 17 in corresponding recesses 12 of the support 25.

In particular, in these cases, during the second gripping step, the holding device 21 collects the article/s 2 from the intermediate station 26 (more precisely, from the support 25). Subsequently (during the transport step), typically, the holding device 21 takes the article/s 2 to the output station 4.

Advantageously but not necessarily, during the transport step, the article/s 2 is/are arranged at the output station 4 in a given position to (in order to) create an assemblage of articles 2 of the ceramic processing industry, in which the position of the articles 2 of the ceramic processing industry is defined. According to some embodiments, the gripping step, the holding step and the transport step are repeated several times (with different articles 2 taken from the same group G or from different groups G) so that further articles 2 of the cited group G and/or of further groups G are arranged at the output station 4 in respective given positions so as to create the assemblage of articles 2. In particular, the assemblage of articles 2 entails a defined position of each article 2.

## Claims

1. A method for transferring articles (2) of the ceramic processing industry, in particular slabs, from an input station (3) to an output station (4);
the method involves the use of a first support (5) comprising a base portion (6), a plurality of projections (7), which protrude from the base portion (6), and a plurality of first recesses (10), each delimited said projections (7) and extending from a first end edge (11) of the first support (5);
the method comprises a standing step, during which at least a group (G) of articles of said articles (2) of the ceramic processing industry is arranged on said first support (5) at the input station (3);
an insertion step, during which a moving device (16), which comprises at least two tines (17), inserts at least part of said tines (17) into corresponding first recesses (10);
a moving step, which is subsequent to the insertion step and during which said moving device (16) moves at least one first article (2) of said group (G) of articles of the ceramic processing industry from said first support (5); and
a transport step, which is subsequent to the moving step and during which said at least one first article (2) is brought to the output station (4);
the method being **characterised in that** it further comprises a first gripping step, which comprises said insertion step and during which the moving device (16), which comprises at least one countering element (18), clamps at least said at least one first article (2) between said countering element (18) and said tines (17); the moving step is at least partially subsequent to the gripping step;
during said standing step, said at least one first article (2) is arranged vertically on said first support (5) at the input station (3) so as to rest on at least one portion of an own peripheral edge (PB);
said at least one first article (2) is substantially flat and has said peripheral edge (PB) and two major faces (FC), which are delimited by said peripheral edge (PB);
said moving device (16) clamps said at least one first article (2) between said countering element (18) and said tines (17), making the countering element (18) and the tines (17) close to one another so that the countering element (18) and the tines (17) come into contact with said peripheral edge (PB).

2. The method according to claim 1, and comprising a second gripping step, during which a holding device (21) clamps said at least one first article (2) on the sides; the moving device (16) releases said at least one first article (2) (in particular, during and/or after the second gripping step) so that said at least one first article (2) is transferred to the holding device (21); in particular, the holding device (21) brings said at least one first article (2) to the output station (4).

3. The method according to claim 2, wherein each first article (2) comprises at least one slab and is delimited by a respective peripheral edge (PB); during said second gripping step, clamping elements (22) of the holding device (21) laterally clamp said at least one first article (2) exerting a pressure upon said peripheral edge (PB).

4. A method according to any one of the preceding claims, wherein the projections (7) are arranged on the base portion (6) so as to define first rows (8); each one of the first recesses (10) extends between two first rows (8) directly next to one another; in particular, during said moving step, said at least one first article (2) is lifted.

5. A method according to any one of the preceding claims, wherein the moving device (16) brings said at least one first article (2) to an intermediate station (26) on a second support (25) defined like said first support (5); the moving device (16) places said at least one first article (6) on the second support (25) inserting at least part of said tines (17) into corresponding first recesses (12) of the second support (25).

6. A method according to one of the claims from 1 to 4 wherein, during said moving step, at least one second article of said group (G) of articles of the ceramic processing industry remains on said first support (5); the method further comprises a second gripping step, during which a holding device (21) clamps said at least one first article (2) on the sides above said at least one second article; in particular, after the second gripping step, the moving device (16) leaves (more in particular, releases) said at least one first article (2) so that said at least one first article (2) is transferred to the holding device (21) .

7. A method according to any one of the preceding claims wherein, during said transport step, said at least one first article (2) is arranged at the output station (4) in a given position so as to obtain an assemblage of articles (2) of the ceramic processing industry, in which the position of the articles (2) of the ceramic processing industry is defined; in particular, the insertion step, the moving step, the holding step and the transport step are repeated several times so that further articles (2) of said group (G) of articles of the ceramic processing industry and/or further groups of articles of the ceramic processing industry are arranged at the output station in respective given positions so as to obtain the assemblage of articles of the ceramic processing industry.

8. A method according to any one of the preceding claims, wherein the projections (7) are arranged on the base portion (6) so as to define first rows (8); each one of the first recesses (10) extends between two first rows (8) directly next to one another;
said projections (7) are arranged on the base portion (6) and are configured so as to define second rows (9), which are transverse to said first rows (8);
said first support (5) comprises a plurality of second recesses (12), each extending from a second end edge (13) of the first support (5) between two second rows (9) directly next to one another; the first end edge (11) being transverse (in particular, substantially perpendicular) to the second end edge (13) .

9. A method according to claim 8, wherein the first recesses (10) are substantially perpendicular to the second recesses (12); the first recesses (10) are substantially parallel to one another; the second recesses (12) are substantially parallel to one another.

10. A method according to any one of the preceding claims, wherein said projections (7) protrude from said base portion (6) and have a width ranging from 12 to 30 mm; and said first recesses (10) each have a respective width ranging from 12 to 20 mm and extend from the first end edge (11) of said first support (5) for at least 15 cm; in particular, said second recesses (12) each have a respective width ranging from 12 to 20 mm and extend from the second end edge (13) of said first support (5) for at least 15 cm.

11. A method according to any one of the preceding claims, wherein the first recesses (10) extend from the first end edge (11) to a third end edge (14) of the first support (5), said third end edge (14) being opposite the first end edge (11); in particular, the second recesses (12) extend from the second end edge (13) to a fourth end edge (15) of said first support (5), said fourth end edge (15) being opposite the second end edge (13); the first end edge (11) and the third end edge (14) being crosswise (in particular, substantially perpendicular) to the second end edge (13) and to the fourth end edge (15).

12. A method according to any one of the preceding claims, wherein the projections (7) have a height, starting from the base portion (6), of at least 12 mm (for example, at least approximately 20 mm) up to approximately 50 mm; each projection (7) has a width of at least 16 mm; each first recess (10) has a width of at least 13 mm; each second recess (12) has a width of at least mm.

13. A method according to any one of the preceding claims, wherein each projection (7) has a shape chosen from the group consisting of: polyhedral, cylindrical, conical, truncated cone, pyramidal, truncated pyramid.

## Patentansprüche

1. Verfahren zum Transferieren von Artikeln (2) der keramikverarbeitenden Industrie, insbesondere Platten, von einer Eingangsstation (3) zu einer Ausgangsstation (4);
wobei das Verfahren die Verwendung eines ersten Trägers (5) umfasst, der einen Basisabschnitt (6), mehrere Vorsprünge (7), die von dem Basisabschnitt (6) vorstehen, und mehrere erste Vertiefungen (10), die jeweils von den Vorsprüngen (7) begrenzt werden und sich von einem ersten Endrand (11) des ersten Trägers (5) erstrecken, aufweist,
wobei das Verfahren einen Aufstellschritt aufweist, während dem wenigstens eine Gruppe (G) von Artikeln der Artikel (2) der keramikverarbeitenden Industrie an der Eingangsstation (3) auf dem ersten Träger (5) angeordnet werden,
einen Einsetzschritt, während dem eine Bewegungsvorrichtung (16), die wenigstens zwei Zacken (17) aufweist, wenigstens einen Teil dieser Zacken (17) in die entsprechenden ersten Vertiefungen (10) einsetzt;
einen Bewegungsschritt, der an den Einsetzschritt anschließt und während dem die Bewegungsvorrichtung (16) wenigstens einen ersten Artikel (2) der Gruppe (G) von Artikeln der keramikverarbeitenden Industrie von dem ersten Träger (5) bewegt; und
einen Transportschritt, der an den Bewegungsschritt anschließt und während dem der wenigstens eine erste Artikel (2) zu der Ausgangsstation (4) gebracht wird;
wobei das Verfahren **dadurch gekennzeichnet ist, dass** es ferner einen ersten Greifschritt aufweist, der den Einsetzschritt aufweist, und während dem die Bewegungsvorrichtung (16), die wenigstens Gegenelement (18) aufweist, wenigstens den wenigstens einen ersten Artikel (2) zwischen das Gegenelement (18) und die Zacken (17) einspannt; wobei der Bewegungsschritt wenigstens teilweise anschließend an den Greifschritt ist;
wobei der wenigstens eine erste Artikel (2) während des Aufstellschritts an der Eingangsstation (3) vertikal auf dem ersten Träger (5) angeordnet wird, so dass er wenigstens auf einem Abschnitt eines eigenen Umfangsrands (PB) aufliegt;
wobei der wenigstens eine erste Artikel (2) im Wesentlichen flach ist und den Umfangsrand (PB) und zwei Hauptflächen (FC) hat, welche von dem Umfangsrand (PB) begrenzt werden,
wobei die Bewegungsvorrichtung (16) den wenigstens einen ersten Artikel (2) zwischen dem Gegenelement (18) und den Zacken (17) einspannt, wobei sie das Gegenelement (18) und die Zacken (17) nahe aneinander bringt, so dass das Gegenelement (18) und die Zacken (17) in Kontakt mit dem Umfangsrand (PB) kommen.

2. Verfahren nach Anspruch 1, das einen zweiten Greifschritt aufweist, während dem eine Haltevorrichtung (21) den wenigstens einen ersten Artikel (2) auf den Seiten einspannt; wobei die Bewegungsvorrichtung (16) den wenigstens einen ersten Artikel (2) (insbesondere während und/oder nach dem zweiten Greifschritt) loslässt, so dass der wenigstens eine erste Artikel (2) zu der Haltevorrichtung (21) transferiert wird; wobei die Haltevorrichtung (21) den wenigstens einen ersten Artikel (2) insbesondere zu der Ausgangsstation (4) bringt.

3. Verfahren nach Anspruch 2, wobei jeder erste Artikel (2) wenigstens eine Platte aufweist und von einem jeweiligen Umfangsrand (PB) begrenzt wird; wobei während des zweiten Greifschritts Einspannelemente (22) der Haltevorrichtung (21) den wenigstens einen ersten Artikel (2) seitlich einspannen, wobei sie einen Druck auf den Umfangsrand (PB) ausüben.

4. Verfahren nach einem der vorhergehenden Ansprüche, wobei die Vorsprünge (7) auf dem Basisabschnitt (6) angeordnet sind, um erste Reihen (8) zu definieren, wobei jede einzelne der ersten Vertiefungen (10) sich während dem Bewegungsschritt zwischen zwei ersten Reihen (8) direkt nebeneinander erstreckt, wobei der wenigstens eine erste Artikel (2) angehoben wird.

5. Verfahren nach einem der vorhergehenden Ansprüche, wobei die Bewegungsvorrichtung (16) den wenigstens einen ersten Artikel (2) zu einer Zwischenstation (26) auf einem zweiten Träger (25), der gleich wie der erste Träger (5) definiert ist, bringt, wobei die Bewegungsvorrichtung (16) den wenigstens einen ersten Artikel (6) auf dem zweiten Träger (25) anordnet, wobei sie wenigstens einen Teil der Zacken (17) in entsprechende erste Vertiefungen (12) des zweiten Trägers (25) einsetzt.

6. Verfahren nach einem der Ansprüche 1 bis 4, wobei während des Bewegungsschritts wenigstens ein zweiter Artikel der Gruppe (G) von Artikeln der keramikverarbeitenden Industrie auf dem ersten Träger (5) verbleibt; wobei das Verfahren ferner einen zweiten Greifschritt aufweist, während dem eine Haltevorrichtung (21) den wenigstens einen ersten Artikel (2) auf den Seiten oberhalb des wenigstens einen zweiten Artikels einspannt; wobei die Bewegungsvorrichtung (16) insbesondere nach dem zweiten Greifschritt den wenigstens einen ersten Artikel (2) zurücklässt (insbesondere loslässt), so dass der wenigstens eine erste Artikel (2) zu der Haltevorrichtung (21) transferiert wird.

7. Verfahren nach einem der vorhergehenden Ansprüche, wobei der wenigstens eine erste Artikel (2) während des Transportschritts in einer gegebenen Position an der Ausgangsstation (4) angeordnet wird, um eine Sammlung von Artikeln (2) der keramikverarbeitenden Industrie zu erhalten, in welcher die Position der Artikel (2) der keramikverarbeitenden Industrie definiert wird; wobei der Einsetzschritt, der Bewegungsschritt, der Halteschritt und der Transportschritt insbesondere mehrere Male wiederholt werden, so dass weitere Artikel (2) der Gruppe (G) von Artikeln der keramikverarbeitenden Industrie und/oder weitere Gruppen von Artikeln der keramikverarbeitenden Industrie in jeweiligen vorgegebenen Positionen an der Ausgangsstation angeordnet werden, um die Sammlung von Artikeln der keramikverarbeitenden Industrie zu erhalten.

8. Verfahren nach einem der vorhergehenden Ansprüche, wobei die Vorsprünge (7) derart auf dem Basisabschnitt (6) angeordnet sind, dass sie erste Reihen (8) definieren, wobei jede einzelne der ersten Vertiefungen (10) sich zwischen zwei ersten Reihen (8) direkt nebeneinander erstreckt,
wobei die Vorsprünge (7) auf dem Basisabschnitt (6) angeordnet und konfiguriert sind, dass sie zweite Reihen (9) definieren, die quer zu den ersten Reihen (8) sind,
wobei der erste Träger (5) mehrere zweite Vertiefungen (12) aufweist, die sich jeweils von einem zweiten Endrand (13) des ersten Trägers (5) zwischen zwei zweiten Reihen (9) direkt nebeneinander erstrecken, wobei der erste Endrand (11) quer (insbesondere im Wesentlichen senkrecht) zu dem zweiten Endrand (13) ist.

9. Verfahren nach Anspruch 8, wobei die ersten Vertiefungen (10) im Wesentlichen senkrecht zu den zweiten Vertiefungen (12) sind, wobei die erste Vertiefungen (10) im Wesentlichen parallel zueinander sind, wobei die zweiten Vertiefungen (12) im Wesentlichen parallel zueinander sind.

10. Verfahren nach einem der vorhergehenden Ansprüche, wobei die Vorsprünge (7) von dem Basisabschnitt (6) vorstehen und eine Breite im Bereich von 12 bis 30 mm haben; und wobei die ersten Vertiefungen (10) jeweils eine Breite im Bereich von 12 bis 20 mm haben und sich über wenigstens 15 cm von dem ersten Endrand (11) des ersten Trägers (5) erstrecken, wobei die zweiten Vertiefungen (12) insbesondere eine jeweilige Breite im Bereich von 12 bis 20 mm haben und sich über wenigstens 15 cm von dem zweiten Endrand (13) des ersten Trägers (5) erstrecken.

11. Verfahren nach einem der vorhergehenden Ansprüche, wobei die ersten Vertiefungen (10) sich von dem ersten Endrand (11) zu dem dritten Endrand (14) des ersten Trägers (5) erstrecken, wobei der dritte Endrand (14) entgegengesetzt zu dem ersten Endrand (11) ist; wobei die zweiten Vertiefungen (12) sich insbesondere von dem zweiten Endrand (13) zu einem vierten Endrand (15) des ersten Trägers (5) erstrecken, wobei der vierte Endrand (15) entgegengesetzt zu dem zweiten Endrand (13) ist; wobei der erste Endrand (11) und der dritte Endrand (14) quer (insbesondere im Wesentlichen senkrecht) zu dem zweiten Endrand (13) und dem vierten Endrand (15) sind.

12. Verfahren nach einem der vorhergehenden Ansprüche, wobei die Vorsprünge (7) beginnend von dem Basisabschnitt (6) eine Höhe von wenigstens 12 mm (zum Beispiel wenigstens ungefähr 20 mm) bis zu ungefähr 50 mm haben; wobei jeder Vorsprung (7) eine Breite von wenigstens 16 mm hat, wobei jede erste Vertiefung (10) eine Breite von wenigstens 13 mm hat, wobei jede zweite Vertiefung (12) eine Breite von wenigstens ? mm hat.

13. Verfahren nach einem der vorhergehenden Ansprüche, wobei jeder Vorsprung (7) eine Form hat, die aus der Gruppe ausgewählt wird, die besteht aus: polyedrisch, zylindrisch, kegelförmig, kegelstumpfförmig, pyramidenförmig, pyramidenstumpfförmig.

## Revendications

1. Méthode de transfert d'articles (2) de l'industrie de transformation de la céramique, en particulier des plaques, d'un poste d'entrée (3) à un poste de sortie (4) ;
la méthode implique l'utilisation d'un premier support (5) comprenant une portion de base (6), une pluralité de saillies (7), qui font saillie à partir de la portion de base (6), et une pluralité de premiers évidements (10), chacun délimité par lesdites saillies (7) et s'étendant à partir d'un premier bord d'extrémité (11) du premier support (5) ;
la méthode comprend une étape stationnaire, au cours de laquelle au moins un groupe (G) d'articles desdits articles (2) de l'industrie de transformation de la céramique est disposé sur ledit premier support (5) au poste d'entrée (3) ;
une étape d'insertion, au cours de laquelle un dispositif de déplacement (16), qui comprend au moins deux dents (17), insère au moins une partie desdites dents (17) dans les premiers évidements correspondants (10) ;
une étape de déplacement, qui fait suite à l'étape d'insertion et au cours de laquelle ledit dispositif de déplacement (16) déplace au moins un premier article (2) dudit groupe (G) d'articles de l'industrie de transformation de la céramique depuis ledit premier support (5) ; et
une étape de transport, qui fait suite à l'étape de déplacement et au cours de laquelle ledit au moins un premier article (2) est amené au poste de sortie (4) ;
la méthode étant **caractérisée en ce qu'**elle comprend en outre une première étape de préhension, qui comprend ladite étape d'insertion et au cours de laquelle le dispositif de déplacement (16), qui comprend au moins un élément de blocage (18), serre au moins ledit au moins un premier article (2) entre ledit élément de blocage (18) et lesdites dents (17) ; l'étape de déplacement est au moins partiellement successive à l'étape de préhension ;
au cours de cette étape stationnaire, ledit au moins un premier article (2) est disposé verticalement sur ledit premier support (5) au poste d'entrée (3) de manière à reposer sur au moins une portion de son propre bord périphérique (PB) ;
ledit au moins un premier article (2) est sensiblement plat et présente ledit bord périphérique (PB) et deux faces principales (FC), qui sont délimitées par ledit bord périphérique (PB) ;
ledit dispositif de déplacement (16) serre ledit au moins un premier article (2) entre ledit élément de blocage (18) et lesdites dents (17), rapprochant l'élément de blocage (18) et les dents (17) l'un des autres de sorte que l'élément de blocage (18) et les dents (17) entrent en contact avec ledit bord périphérique (PB).

2. Méthode selon la revendication 1, et comprenant une deuxième étape de préhension, au cours de laquelle un dispositif de maintien (21) serre ledit au moins un premier article (2) sur les côtés ; le dispositif de déplacement (16) libère ledit au moins un premier article (2) (en particulier, pendant et/ou après la deuxième étape de préhension) de sorte que ledit au moins un premier article (2) est transféré au dispositif de maintien (21) ; en particulier, le dispositif de maintien (21) amène ledit au moins un premier article (2) au poste de sortie (4).

3. Méthode selon la revendication 2, dans laquelle chaque premier article (2) comprend au moins une plaque et est délimité par un bord périphérique (PB) respectif ; au cours de ladite deuxième étape de préhension, les éléments de serrage (22) du dispositif de maintien (21) serrent latéralement ledit au moins un premier article (2) en exerçant une pression sur ledit bord périphérique (PB).

4. Méthode selon l'une quelconque des revendications précédentes,
dans laquelle les saillies (7) sont disposées sur la portion de base (6) de manière à définir des premières rangées (8) ; chacun des premiers évidements (10) s'étend entre deux premières rangées (8) directement l'un à côté de l'autre ; en particulier, au cours de ladite étape de déplacement, ledit au moins un premier article (2) est soulevé.

5. Méthode selon l'une quelconque des revendications précédentes, dans laquelle le dispositif de déplacement (16) amène ledit au moins un premier article (2) à un poste intermédiaire (26) sur un deuxième support (25) défini comme ledit premier support (5) ; le dispositif de déplacement (16) place ledit au moins un premier article (6) sur le deuxième support (25) en insérant au moins une partie desdites dents (17) dans des premiers évidements (12) correspondants du deuxième support (25) .

6. Méthode selon l'une des revendications de 1 à 4 dans laquelle, pendant ladite étape de déplacement, au moins un deuxième article dudit groupe (G) d'articles de l'industrie de transformation de la céramique reste sur ledit premier support (5) ; la méthode comprend en outre une deuxième étape de préhension, au cours de laquelle un dispositif de maintien (21) serre ledit au moins un premier article (2) sur les côtés au-dessus dudit au moins un deuxième article ; en particulier, après la deuxième étape de préhension, le dispositif de déplacement (16) laisse (plus particulièrement, libère) ledit au moins un premier article (2) de sorte que ledit au moins un premier article (2) est transféré au dispositif de maintien (21) .

7. Méthode selon l'une quelconque des revendications précédentes dans laquelle, au cours de ladite étape de transport, ledit au moins un premier article (2) est disposé au poste de sortie (4) dans une position donnée de manière à obtenir un assemblage d'articles (2) de l'industrie de transformation de la céramique, dans lequel la position des articles (2) de l'industrie de transformation de la céramique est définie ; en particulier, l'étape d'insertion, l'étape de déplacement, l'étape de maintien et l'étape de transport sont répétées plusieurs fois afin que d'autres articles (2) dudit groupe (G) d'articles de l'industrie de transformation de la céramique et/ou d'autres groupes d'articles de l'industrie de transformation de la céramique soient disposés au poste de sortie dans des positions données respectives afin d'obtenir l'assemblage d'articles de l'industrie de transformation de la céramique.

8. Méthode selon l'une quelconque des revendications précédentes, dans laquelle les saillies (7) sont disposées sur la portion de base (6) de manière à définir des premières rangées (8) ; chacun des premiers évidements (10) s'étend entre deux premières rangées (8) directement l'un à côté de l'autre ;
lesdites saillies sont disposées sur la portion de base (6) et sont configurées de manière à définir des deuxièmes rangées (9), qui sont transversales par rapport aux premières rangées (8) ;
ledit premier support (5) comprend une pluralité de deuxièmes évidements (12), chacun s'étendant à partir d'un deuxième bord d'extrémité (13) du premier support (5) entre deux deuxièmes rangées (9) directement l'un à côté de l'autre ; le premier bord d'extrémité (11) étant transversal (en particulier, sensiblement perpendiculaire) au deuxième bord d'extrémité (13).

9. Méthode selon la revendication 8, dans laquelle les premiers évidements (10) sont sensiblement perpendiculaires aux deuxièmes évidements (12) ; les premiers évidements (10) sont sensiblement parallèles les uns aux autres ; les deuxièmes évidements (12) sont sensiblement parallèles les uns aux autres.

10. Méthode selon l'une quelconque des revendications précédentes, dans laquelle lesdites saillies (7) font saillie à partir de ladite portion de base (6) et ont une largeur allant de 12 à 30 mm ; et lesdits premiers évidements (10) ont chacun une largeur respective allant de 12 à 20 mm et s'étendent à partir du premier bord d'extrémité (11) dudit premier support (5) sur au moins 15 cm ; en particulier, lesdits deuxièmes évidements (12) ont chacun une largeur respective allant de 12 à 20 mm et s'étendent à partir du deuxième bord d'extrémité (13) dudit premier support (5) sur au moins 15 cm.

11. Méthode selon l'une quelconque des revendications précédentes, dans laquelle les premiers évidements (10) s'étendent du premier bord d'extrémité (10) à un troisième bord d'extrémité (14) du premier support (5), ledit troisième bord d'extrémité (14) étant opposé au premier bord d'extrémité (11) ; en particulier, les deuxièmes évidements (12) s'étendent du deuxième bord d'extrémité (13) à un quatrième bord d'extrémité (15) dudit premier support (5),
ledit quatrième bord d'extrémité (15) étant opposé au deuxième bord d'extrémité (13) ; le premier bord d'extrémité (11) et le troisième bord d'extrémité (14) étant transversaux (en particulier, sensiblement perpendiculaires) au deuxième bord d'extrémité (13) et au quatrième bord d'extrémité (15) .

12. Méthode selon l'une quelconque des revendications précédentes, dans laquelle les saillies (7) ont une hauteur, à partir de la portion de base (6), d'au moins 12 mm (par exemple, d'au moins environ 20 mm) jusqu'à environ 50 mm ; chaque saillie (7) a une largeur d'au moins 16 mm ; chaque premier évidement (10) a une largeur d'au moins 13 mm ; chaque deuxième évidement (12) a une largeur d'au moins mm.

13. Méthode selon l'une quelconque des revendications précédentes, dans laquelle chaque saillie (7) a une forme choisie dans le groupe constitué de : polyédrique, cylindrique, conique, tronconique, pyramidale, pyramide tronquée.
